# EUROPÄISCHE PATENTSCHRIFT

(11) **EP 3 205 897 B1**
(45) Veröffentlichungstag und Bekanntmachung des Hinweises auf die Patenterteilung: **09.01.2019**
(21) Anmeldenummer: 16155045.4
(22) Anmeldetag: 10.02.2016
(51) Int. Cl.: F16D 3/84, F16J 3/04, F16P 1/02

(54) **SCHUTZVORRICHTUNG FÜR EINE GELENKWELLE UND SCHUTZANORDNUNG MIT GELENKWELLE UND EINER SOLCHEN SCHUTZVORRICHTUNG**
PROTECTING DEVICE FOR A DRIVE SHAFT AND PROTECTION ARRANGEMENT WITH DRIVE SHAFT AND PROTECTING DEVICE AS SUCH
DISPOSITIF DE PROTECTION POUR UN ARBRE D'ENTRAÎNEMENT ET ENSEMBLE DE PROTECTION AVEC ARBRE D'ENTRAÎNEMENT ET UN TEL DISPOSITIF DE PROTECTION

(43) Veröffentlichungstag der Anmeldung: 16.08.2017
(73) Patentinhaber: GKN Walterscheid GmbH, 53797 Lohmar (DE)
(72) Erfinder: LITTAU, Matthias, 53347 Alfter (DE); HECTOR, Martin, 53721 Siegburg (DE); HÖCK, Andreas, 53797 Lohmar (DE); ADAMEK, Wolfgang, 53797 Lohmar (DE); KÖRBER, Stefan, 50259 Pulheim (DE)
(74) Vertreter: Neumann Müller Oberwalleney & Partner Patentanwälte

(56) Entgegenhaltungen:
- EP-B1- 0 918 951
- WO-A1-2008/126791
- GB-A- 308 063
- GB-A- 191 420 526
- US-A- 1 982 445

## Beschreibung

Die Erfindung betrifft eine Schutzvorrichtung für eine Gelenkwelle, wobei die Schutzvorrichtung ein Befestigungselement aufweist, das derart ausgebildet ist, dass es um einen aus einem Gehäuse ragenden Wellenzapfen positionierbar und am Gehäuse befestigbar ist. Die Schutzvorrichtung weist ferner einen rohrförmigen Schutztopf auf, der sich entlang einer Längsachse erstreckt und der derart ausgebildet ist, dass er um eine mit dem Wellenzapfen verbundene Gelenkwelle positionierbar ist. Zum Befestigen des Schutztopfes an dem Befestigungselement weist die Schutzvorrichtung eine Verriegelungseinrichtung auf. Ferner betrifft die Erfindung eine Schutzanordnung mit einer Gelenkwelle und einer solchen Schutzvorrichtung.

Eine solche Schutzvorrichtung ist aus der EP 0 918 951 B1 bekannt. Die dort beschriebene Schutzvorrichtung weist eine Scheibe auf, die an einem Getriebegehäuse befestigt werden kann, wobei aus dem feststehenden Getriebegehäuse ein Wellenzapfen vorsteht. An dem Wellenzapfen lässt sich eine Gelenkwelle mit einer Schutzabdeckung anschließen. Die Schutzvorrichtung weist ferner eine Hülse auf, die rohrförmig gestaltet ist und über den Umfang einteilig geschlossen ausgebildet ist. Die Hülse ist mit einer inneren Kante der Scheibe in Eingriff und über Spannclips an der Kante festgeklemmt und kann von dieser auch wieder gelöst werden. Die Gelenkwelle ist durch die Hülse hindurchgeführt. Nachteil ist, dass bei vor der Montage der Gelenkwelle die Hülse auf die Gelenkwelle aufgefädelt werden muss, so dass die Gelenkwelle zusammen mit der Hülse gehandhabt werden muss.

Durch diese Art der Schutzvorrichtung wird ein weiterer Schutz gewährleistet, um zu verhindern, dass Bedienpersonal in rotierende Bauteile der Gelenkwelle greift. Die Gelenkwelle, die mit dem Wellenzapfen antriebsmäßig verbunden wird, weist einen Gelenkwellenschutz auf, der im Wesentlichen rohrförmig gestaltet ist und die Gelenkwelle umgibt. Der Gelenkwellenschutz ist drehbar an der Gelenkwelle befestigt und gegen Drehen gesichert. Hierzu sind Drehsicherungen, zum Beispiel in Form einer Kette, vorgesehen, die den Gelenkwellenschutz mit einem stehenden Bauteil verbinden. Somit ist grundsätzlich ein Schutz gewährleistet, der verhindert, dass in drehende Bauteile der Gelenkwelle gegriffen werden kann, da die Gelenkwelle innerhalb des feststehenden Gelenkwellenschutzes drehbar angeordnet ist. Besondere Gefahren ergeben sich jedoch noch an den Anschlussstellen zwischen zum Beispiel dem Gehäuse eines Getriebes und dem Gelenkwellenschutz. In diesen Bereichen ist ein axialer freier ungeschützter Bereich nicht zu vermeiden, um das Abwinkeln der Gelenkwelle weiter zu ermöglichen und eine Kollision zwischen dem Gelenkwellenschutz und dem Gehäuse des Getriebes zu vermeiden. Um auch diesen Bereich abzudecken, ist eine Schutzvorrichtung der eingangs genannten Art vorzusehen. Der Schutztopf ist hierbei in axialer Richtung so groß bemessen, dass er zumindest den offenen Bereich zwischen dem Gehäuse des Getriebes und dem Gelenkwellenschutz überdeckt. Vorzugsweise wird auch ein Teil des Gelenkwellenschutzes in axialer Richtung überdeckt.

WO 2008/126791 A1 zeigt rohrförmige Schutzelemente, die vorübergehend um Faltenbälge einer Gelenkwelle positioniert werden, um zu verhindern, dass die Faltenbälge bei der Montage der Gelenkwelle an einem Fahrzeug beschädigt werden. Nach der Montage der Gelenkwelle werden die Schutzelemente wieder entfernt.

GB 20526 A offenbart einen Schutz für eine Flanschverbindung, über die zwei Wellenenden miteinander verbunden sind, mit axial vorstehenden Schraubenköpfen und Gewindemuttern. Der Schutz deckt die Schraubenköpfe und Gewindemuttern ab und bildet eine glatte Außenfläche ohne vorstehende Elemente. Der Schutz läuft im Betrieb mit der Flanschverbindung um.

Aufgabe der vorliegenden Erfindung ist es, einen einfach zu montierenden und zu demontierenden Schutztopf der Schutzvorrichtung bereitzustellen.

Die Aufgabe wird durch eine Schutzvorrichtung für eine Gelenkwelle gelöst, wobei die Schutzvorrichtung Folgendes aufweist: ein Befestigungselement, das derart ausgebildet ist, dass es um einen aus einem Gehäuse ragenden Wellenzapfen positionierbar und am Gehäuse befestigbar ist, einen rohrförmigen Schutztopf, der sich entlang einer Längsachse erstreckt und der derart ausgebildet ist, dass er um eine mit dem Wellenzapfen verbundene Gelenkwelle positionierbar ist, und zumindest eine Verriegelungseinrichtung zum Befestigen des Schutztopfes an dem Befestigungselement, wobei der Schutztopf zumindest eine sich in Längsrichtung erstreckende Fügestelle aufweist, an welcher der Schutztopf geteilt ist und geöffnet werden kann.

Zumindest eine der Fügestellen weist einen Verschlussmechanismus auf, mit dem der Schutztopf zum Verschließen verbindbar ist. Die Fügestellen können auch derart gestaltet sein, dass sie sowohl als Scharnier dienen können und als Verschlussmechanismus. Dies hat den Vorteil, dass grundsätzlich alle Fügestellen identisch bzw. annähernd identisch ausgestaltet werden können.

Der Verschlussmechanismus weist hierbei Formschlusselemente, insbesondere in Form von Ösen und/oder Haken, auf, die jeweils an zu verbindenden Längskanten der jeweiligen Fügestelle angeordnet sind und ineinandergreifend ausgebildet sind.

Die Formschlusselemente fluchten im verbundenen Zustand des Schutztopfes entlang einer Verbindungsachse zueinander und bilden einen Verbindungskanal, wobei die Verbindungsachse vorzugsweise parallel zur Längsachse ausgerichtet ist. Ferner ist ein Verbindungsstift vorgesehen, der durch den Verbindungskanal hindurchgeführt ist und in diesem einsitzt. Der Verbindungsstift dient in diesem Fall dazu, die Formschlusselemente zueinander zu halten. Hierbei können die Formschlusselemente zudem derart ausgebildet sein, dass in dem Fall, in dem mehrere Fügestellen vorgesehen sind, die zwei miteinander verbundenen Schalenelemente um den Verbindungsstift scharnierbar sind. In diesem Fall bildet der Verschlussmechanismus gleichzeitig ein Scharnier.

Die Fügestelle erstreckt sich über die gesamte Länge des Schutztopfes, so dass der Schutztopf an dieser Stelle derart geöffnet werden kann, dass dieser in radialer Richtung über die Gelenkwelle gestülpt werden kann. Es ist somit nicht erforderlich, vor der Montage der Gelenkwelle den Schutztopf auf die Gelenkwelle aufzufädeln.

Hierzu kann der gesamte Schutztopf elastisch gestaltet sein, so dass er an der Fügestelle aufgeweitet werden kann. Gemäß einer bevorzugten Ausführungsform weist der Schutztopf zumindest zwei sich in Längsrichtung erstreckende Fügestellen auf, die den Schutztopf in mindestens zwei Schalenelemente teilen. Somit kann der Schutztopf grundsätzlich elastisch ausgestaltet sein, er kann jedoch auch aus einem verhältnismäßig starren Material hergestellt sein.

Zumindest eine der Fügestellen kann hierbei ein Scharnier umfassen, um welches die mindestens zwei Schalenelemente zueinander bewegbar bzw. scharnierbar sind. Das Scharnier kann mit einer Drehachse versehen sein oder als Filmscharnier ausgebildet sein.

Der Verbindungsstift kann einen gegenüber dem Verbindungskanal erweiterten Kopfabschnitt aufweisen, der an einem Ende des Verbindungsstiftes angeordnet ist. Somit lässt sich der Verbindungsstift in den Verbindungskanal einschieben, wobei dasjenige Ende in den Verbindungskanal eingeschoben wird, welches vom Kopfabschnitt abgewandt ist. Die Ausgestaltung des Kopfabschnitts derart, dass dieser gegenüber dem Verbindungskanal erweitert ist, verhindert, dass der Verbindungsstift zu weit in den Verbindungskanal eingeschoben werden kann zudem definiert der Kopfabschnitt einen Endanschlag.

Der Kopfabschnitt kann in Ausgestaltung als Öse gestaltet sein. Hierdurch wird ermöglicht, dass ein Sicherungselement das Befestigungselement, den Schutztopf und den Verbindungsstift in einem voneinander gelösten Zustand untrennbar miteinander verbindet. Das Sicherungselement kann zum Beispiel ein Seil, ein Draht oder eine Kette sein, die am Befestigungselement und am Schutztopf, zum Beispiel mit ihren Enden, verbunden ist und welches durch die Öse am Verbindungsstift hindurchgeführt ist. Alternativ kann das Sicherungselement auch anders am Verbindungsstift befestigt sein. Hierdurch wird sichergestellt, dass selbst dann, wenn der Schutztopf geöffnet und vom Befestigungselement entfernt ist, die einzelnen Bauteile nicht verloren gehen.

Vorzugsweise ist das Befestigungselement im montierten Zustand des Schutztopfes derart ausgebildet und angeordnet, dass es den Verbindungskanal in axialer Richtung überdeckt, wobei der Verbindungsstift gegen Entfernen aus dem Verbindungskanal in Richtung zum Befestigungselement gesichert ist. Beim Versuch, den Verbindungsstift in Richtung zum Befestigungselement herauszuziehen, stößt dieser zunächst an das Befestigungselement, bevor er vollständig aus dem Verbindungskanal entfernt werden kann. Hierdurch ist sichergestellt, dass im montierten Zustand des Schutztopfes der Verbindungsstift nicht unbeabsichtigt, zum Beispiel durch Erschütterungen oder Schwingungen, aus dem Verbindungskanal austritt. Hierzu ist vorzugsweise vorgesehen, dass der erweiterte Kopfabschnitt des Verbindungsstiftes aus dem dem Befestigungselement zugewandten Ende des Verbindungskanals herausragt, so dass der Verbindungsstift auch nicht in die andere Richtung, vom Befestigungselement weg, aus dem Verbindungskanal herausgezogen werden oder heraustreten kann.

Somit muss grundsätzlich erst der Schutztopf vom Befestigungselement gelöst werden und axial parallel zur Längsachse verschoben werden, um im Anschluss daran den Verbindungsstift aus dem Verbindungskanal zu entfernen und den Schutztopf zu öffnen.

Die Aufgabe wird ferner durch eine Schutzanordnung gelöst, die eine Gelenkwelle mit einem die Gelenkwelle umgebenden Gelenkwellenschutz und eine Schutzvorrichtung wie vorangehend beschrieben umfasst. Die Gelenkwelle ist derart gestaltet, dass sie antriebsmäßig mit einem aus einem Gehäuse ragenden Wellenzapfen verbindbar ist. Das Befestigungselement der Schutzvorrichtung ist hierbei um den Wellenzapfen positionierbar und am Gehäuse befestigbar. Der Schutztopf der Schutzvorrichtung ist derart angeordnet, dass dieser sowohl die Gelenkwelle als auch den Gelenkwellenschutz teilweise umgibt.

Somit ist sichergestellt, dass ein Spalt zwischen dem Gelenkwellenschutz und dem Gehäuse durch den Schutztopf abgedeckt ist.

Ein bevorzugtes Ausführungsbeispiel wird im Folgenden anhand der Zeichnungen näher erläutert. Hierin zeigen:
- Figur 1: eine perspektivische Explosionsdarstellung einer erfindungsgemäßen Schutzvorrichtung zum Schutz einer Gelenkwelle,
- Figur 2: eine perspektivische Ansicht der Schutzvorrichtung gemäß Figur 1 mit montiertem Schutztopf,
- Figur 3: eine vergrößerte perspektivische Ansicht der Verriegelungseinheit der Schutzvorrichtung gemäß der Figuren 1 und 2,
- Figur 4: eine Seitenansicht der Verriegelungseinheit gemäß Figur 3,
- Figur 5: den Verschlussmechanismus an einer der Fügestellen im geöffneten Zustand, und
- Figur 6: den Verschlussmechanismus gemäß Figur 5 im geschlossenen Zustand.

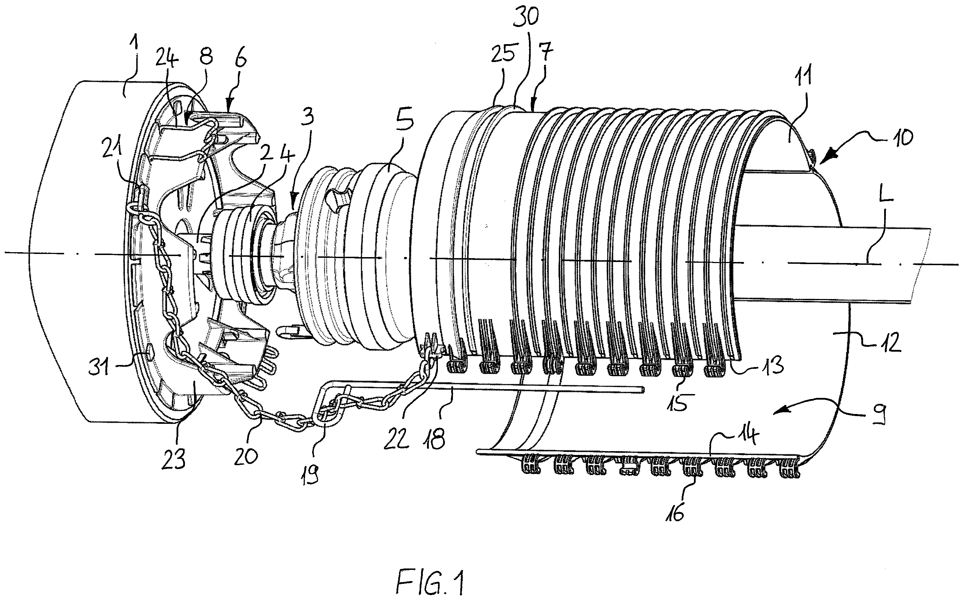

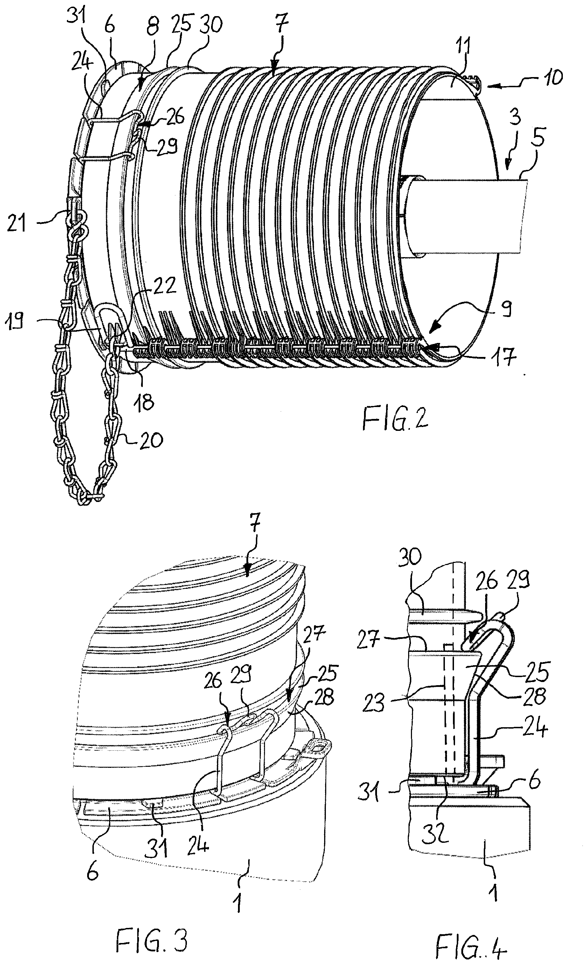

Die Figuren 1 und 2 zeigen die Schutzvorrichtung in unterschiedlichen Ansichten und werden im Folgenden zusammen beschrieben.

Die Schutzvorrichtung ist an einem Gehäuse 1 zum Beispiel eines Getriebes befestigt, wobei aus dem Gehäuse 1 ein Wellenzapfen 2 herausragt, der um eine Längsachse L angetrieben oder antreibbar ist. Es kann sich hierbei zum Beispiel um die Eingangswelle eines Getriebes eines landwirtschaftlichen anzutreibenden Geräts handeln.

Mit dem Wellenzapfen 2 ist eine Gelenkwelle 3 antriebsmäßig verbunden, so dass diese mit dem Wellenzapfen 2 um die Längsachse L umläuft. Hierzu ist ein Verschluss 4 vorgesehen, mit dem die Gelenkwelle von dem Wellenzapfen 2 lösbar und verriegelbar ist. Zur Drehmomentübertragung dient eine übliche Wellenverzahnung.

Um Bedienpersonal vor drehenden Bauteilen zu schützen, ist ein Gelenkwellenschutz 5 vorgesehen, der auf der Gelenkwelle 3 drehbar gelagert ist und diese aufnimmt und der gegenüber einem stehenden Bauteil, zum Beispiel dem Gehäuse 1 oder einem anderen Gehäuse, drehfest gehalten ist. Hierzu kann zum Beispiel eine Kette (nicht gezeigt) dienen, die einerseits mit einem stehenden Bauteil und andererseits mit dem Gelenkwellenschutz 5 verbunden ist und somit verhindert, dass sich der Gelenkwellenschutz 5 zusammen mit der Gelenkwelle 3 dreht.

Wie in Figur 1 ersichtlich ist, ist ein axialer Bereich zwischen dem Getriebegehäuse 1 und dem Ende des Gelenkwellenschutzes 5 ungeschützt, das bedeutet, dass Bedienpersonal in diesen Bereich hineingreifen könnte und eine Verletzungsgefahr besteht. Um diesen Bereich ebenfalls abzudecken, ist die erfindungsgemäße Schutzvorrichtung vorgesehen. Die Schutzvorrichtung umfasst ein Befestigungselement 6 und einen Schutztopf 7. Das Befestigungselement 6 ist fest am Gehäuse 1 befestigt. Über eine Verriegelungseinrichtung 8 kann der Schutztopf 7 lösbar mit dem Befestigungselement 6 verbunden werden. Der Schutztopf 7 kann geöffnet werden (Figur 1) um, wie nachfolgend noch näher erläutert wird, um die Gelenkwelle 3 herum angeordnet zu werden. Im geschlossenen Zustand (Figur 2) ist der Schutztopf 7 rohrförmig gestaltet und, im mit dem Befestigungselement 6 verriegelten Zustand, koaxial zur Längsachse L angeordnet. Hierbei deckt der Schutztopf 7 den Bereich der Gelenkwelle 3 zwischen dem Gehäuse 1 und dem Gehäuse 1 zugewandten Ende des Gelenkwellenschutzes 5 ab, so dass ein Hineingreifen in drehende Bauteile der Gelenkwelle 3 oder an den sich drehenden Wellenzapfen 2 verhindert wird.

Der Schutztopf 7 weist eine erste Fügestelle 9 und eine zweite Fügestelle 10 auf. Die Fügestellen 9, 10 verlaufen parallel zur Längsachse L und teilen den Schutztopf 7 in ein erstes Schalenelement 11 und in ein zweites Schalenelement 12. Die Fügestellen 9, 10 sind im vorliegenden Fall identisch ausgebildet, so dass die beiden Schalenelemente 11, 12 identisch gestaltet sein können. Hierdurch wird vermieden, dass unterschiedliche Werkzeuge für die Herstellung des ersten Schalenelements 11 und des zweiten Schalenelements 12 bereitgestellt werden müssen. Zudem reduziert sich hierdurch die Teilevielfalt der Schutzvorrichtung. Im Folgenden wird daher die erste Fügestelle 9 exemplarisch näher erläutert.

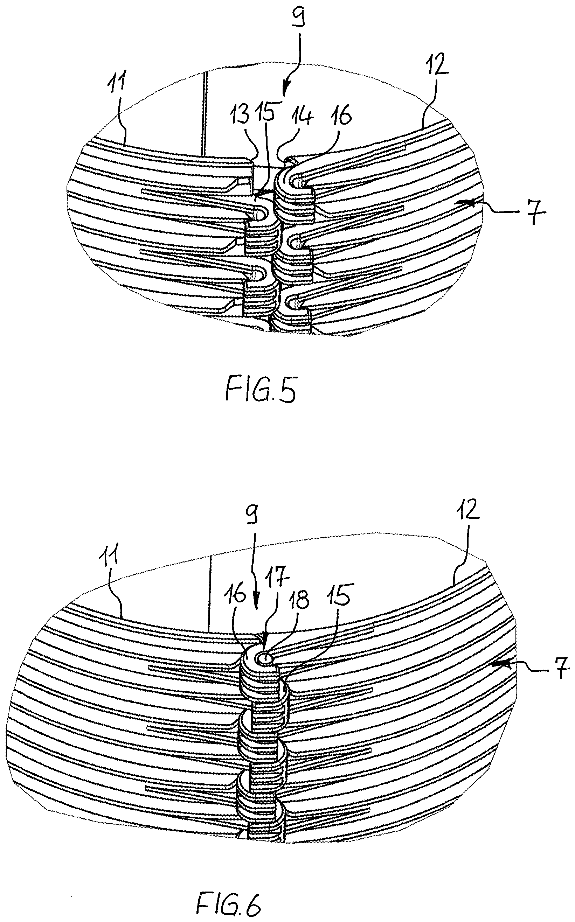

Die erste Fügestelle 9 ist durch eine Längskante 13 des ersten Schalenelements 11 und eine Längskante 14 des zweiten Schalenelements 12 gebildet, wobei die beiden Längskanten 13, 14 im geschlossenen Zustand des Schutztopfes 7 (Figur 2) in Anlage zueinander sind und miteinander verbunden sind. Zum Verbinden der Längskanten 13, 14 ist ein Verschlussmechanismus mit Formschlusselementen in Form von Haken 15 an der Längskante 13 des ersten Schalenelements 11 und mit Haken 16 entlang der Längskante 14 des zweiten Schalenelements 12 vorgesehen. Die Haken 15, 16 der beiden Längskanten 13, 14 sind jeweils von der jeweiligen anderen Längskante 13, 14 weggerichtet geöffnet. Zudem greifen die Haken 15 der Längskante 13 des ersten Schalenelements 11 in axiale Lücken zwischen den Haken 16 entlang der Längskante 14 des zweiten Schalenelements 12 ein, wenn sich der Schutztopf 7 in seiner geschlossenen Position befindet, wie dies in den Figuren 5 und 6 verdeutlicht ist. Im geschlossenen Zustand (Figuren 2 und 6) bilden die Haken 15, 16 einen Verbindungskanal 17, der sich parallel zur Längsachse L erstreckt. In den Verbindungskanal 17 wird ein Verbindungsstift 18 axial eingeschoben, so dass sich die Haken 15, 16 beim Versuch, die beiden Schalenelemente 11, 12 voneinander weg zu bewegen, gegen den Verbindungsstift 18 in Umfangsrichtung abstützen und ein Öffnen der Schalenelemente 11, 12 somit verhindert wird. Um zu vermeiden, dass der Verbindungsstift 18 zu weit in einer Richtung durch den Verbindungskanal 17 hindurchgeschoben werden kann, weist der Verbindungsstift 18 einen gegenüber dem Durchmesser des Verbindungskanals 17 erweiterten Kopfabschnitt in Form einer Öse 19 auf. Die Öse 19 befindet sich an dem dem Befestigungselement 6 zugewandten Ende des Verbindungskanals 17 bzw. an dem dem Befestigungselement 6 zugewandten Ende des Schutztopfs 7. Das Befestigungselement 6 ist in axialer Richtung betrachtet in Überdeckung mit dem Verbindungsstift 18 bzw. der Öse 19 angeordnet. Der Verbindungsstift 18 stößt daher beim Versuch, diesen aus dem Verbindungskanal 17 herauszubewegen, gegen das Befestigungselement 6, ohne dass der Verbindungsstift 18 den Verbindungskanal 17 vollständig verlassen hat. Somit wird im montierten Zustand gemäß Figur 2 verhindert, dass der Verbindungsstift 18 unbeabsichtigt aus dem Verbindungskanal 19 herausgezogen werden kann oder sich aufgrund von Vibration herausbewegt.

Die zweite Fügestelle 10 kann identisch ausgebildet sein, wobei ein identischer Verbindungsstift 18 vorgesehen ist. Die zweite Fügestelle 10 kann sich auch dahingehend von der ersten Fügestelle 9 unterscheiden, dass ein abgewandelter Verbindungsstift vorgesehen wird, der zum Beispiel keine Öse 19 aufweist, sondern an beiden Enden einen erweiterten Abschnitt durch Umformung des Verbindungsstifts 18 aufweist, so dass der Schutztopf 7 an der zweiten Fügestelle 10 nicht geöffnet werden kann, sondern ausschließlich als Scharnier dient. Sofern die beiden Fügestellen 9, 10 identisch ausgebildet sind, also identische Verbindungsstifte 18 aufweisen, wie an der ersten Fügestelle 9 gezeigt, können beide Fügestellen 9, 10 als Scharnier dienen und beide Fügestellen 9, 10 als Verschlussmechanismus, in dem der Schutztopf 7 geöffnet werden kann.

Zur Montage des Schutztopfes 7 lässt sich nun der Verbindungsstift 18 aus dem Verbindungskanal 17 der ersten Fügestelle 9 herausziehen, so dass die beiden Schalenelemente 11, 12 um die zweite Fügestelle 10 scharniert werden können und der Schutztopf 7 geöffnet wird. Der Schutztopf 7 kann dann, wie in Figur 1 ersichtlich, in radialer Richtung zur Längsachse L um die Gelenkwelle 3 herum positioniert werden. Sobald sich der geöffnete Schutztopf 7 in dieser Position befindet, können die Schalenelemente 11, 12 zueinander bewegt werden, so dass die Fügestelle 9 geschlossen wird. Dann wird der Verbindungsstift 18 in den Verbindungskanal 17 eingeschoben, so dass der Schutztopf 7 geschlossen ist und nicht mehr geöffnet werden kann.

Um eine Verliersicherung zu bieten, ist ein Sicherungselement in Form einer Kette 20 vorgesehen. Die Kette 20 ist an einem Ende an einer Sicherungsöse 21 des Befestigungselements 3 befestigt und an einem anderen Ende an einer Sicherungsöse 22 des ersten Schalenelements 11 befestigt. Ferner ist die Kette 20 durch die Öse 19 des Verbindungsstifts 18 hindurchgeführt, so dass im geöffneten Zustand des Schutztopfs 7, wie in Figur 1 dargestellt, sowohl der Schutztopf 7 als auch der Verbindungsstift 18 verliergesichert gegenüber dem Befestigungselement 6 gehalten sind. Alternativ könnte die Kette 20 auch mit einem Kettenglied an dem Verbindungsstift 18 fest verbunden sein. Darüber hinaus könnte anstelle einer Kette auch ein Seil oder ein Draht verwendet werden.

Sobald der Schutztopf 7 geschlossen ist, lässt sich dieser axial in Richtung der Längsachse L auf das Befestigungselement 6 aufschieben und mittels der Verriegelungseinrichtung 8 an dem Befestigungselement 6 festlegen.

Hierzu weist das Befestigungselement 6 einen koaxial zur Längsachse L angeordneten Stützkragen 23 auf, auf den der Schutztopf 7 aufgeschoben wird. Alternativ ist es auch denkbar, dass der Stützkragen 23 derart gestaltet ist, dass der Schutztopf 7 in den Stützkragen 23 eingesteckt wird. Der Stützkragen 23 dient zur radialen Abstützung des Schutztopfs 7.

Die Verriegelungseinrichtung umfasst zwei diametral gegenüberliegend angeordnete Rastelemente 24, von denen im Folgenden eines repräsentativ beschrieben wird. Grundsätzlich ist es auch möglich, drei oder mehr Rastelemente anzuordnen. Ferner umfasst die Verriegelungseinrichtung einen Rastvorsprung 25. In der vorliegenden Ausführungsform ist das Rastelement 24 am Befestigungselement 6 angeordnet und der Rastvorsprung 25 am Schutztopf 7. Grundsätzlich können diese Elemente jedoch auch umgekehrt angeordnet sein, d.h. der Rastvorsprung 25 kann am Befestigungselement 6 und das Rastelement 24 am Schutztopf 7 angeordnet sein.

Das Rastelement 24 ist als Federelement in Form eines Federbügels gestaltet. Das Rastelement 24 ist demnach elastisch ausgebildet und kann aus der in Figur 4 dargestellten Rastposition in eine radial nach außen gebogene Freigabestellung überführt werden. Denkbar ist auch, dass das Rastelement 24 eine separate Feder aufweist, welche ein starres Element federnd bewegt.

In der verrasteten Position stützt sich das Rastelement 24 mit einem Rastabschnitt 26 axial gegen eine Rastfläche 27 des Rastvorsprungs 25 ab. Der Rastvorsprung 25 ist als umlaufender Vorsprung über den gesamten Umfang des Schutztopfs 7 ausgebildet. Die Rastfläche 27 ist senkrecht zur Längsachse L angeordnet. Die Rastfläche 27 weist vom Gehäuse 1 weg, so dass der Schutztopf 7 am Befestigungselement 6 verrastet ist.

Zur Montage lässt sich der Schutztopf 7 auf den Stützkragen 23 aufschieben, wobei der Schutztopf 7 automatisch verrastet wird. Hierzu weist der Rastvorsprung 25 eine Stellfläche 28 auf, die beim Montagevorgang des Schutztopfs 7 in axialer Richtung derart mit dem Rastelement 24 zusammenwirkt, dass das Rastelement 24 in seine Freigabestellung radial nach außen überführt wird. Hierzu erstreckt sich die Stellfläche 28 in axialer Richtung mit zunehmendem Abstand vom Stützkragen 23, der in Figur 4 mit unterbrochenen Linien angedeutet ist. Der Rastvorsprung 25 ist im Bereich der Stellfläche 28 kegelstumpfförmig gestaltet, wobei sich die Stellfläche 28, welche die Außenfläche des Kegelstumpfs darstellt, in Richtung vom Befestigungselement 6 bzw. vom Gehäuse 1 weg hin öffnet. Somit drückt die Stellfläche 28 beim Bewegen des Schutztopfs 7 in Richtung zum Gehäuse 1 das Rastelement 24 radial nach außen, bis der Rastabschnitt 26 den Rastvorsprung 25 hintergreift und sich axial gegen die Rastfläche 27 abstützt.

Der Rastabschnitt 26 des Rastelements 24 ist hierbei ebenfalls derart schräg zur Längsachse L angestellt, dass sich eine Vorderkante 32 des Schutztopfs 7 zum besseren Einfädeln des Schutztopfs 7 gegen den Rastabschnitt 26 abstützen kann und gegebenenfalls das Rastelement 24 auch schon etwas radial nach außen bewegen kann.

Um den Schutztopf 7 wieder vom Befestigungselement 6 zu lösen, können die Rastelemente 24 radial nach außen gedrückt werden. Hierzu weisen die Rastelemente 24 jeweils eine Ausbuchtung 29 als Angriffsmittel für ein Werkzeug auf. Als Werkzeug kann zum Beispiel ein Schraubenzieher dienen, der sich einerseits gegen die Ausbuchtung 29 und andererseits gegen einen Kragen 30 oder gegen die Stellfläche 28 am Schutztopf 7 abstützt, so dass das Rastelement 24 vom Schutztopf 7 weg radial nach außen gehebelt werden kann. Besonders vorteilhaft ist hierbei, dass der Schraubenzieher in etwa parallel zur Längsachse L angesetzt werden kann und nicht in radialer Richtung angesetzt werden muss, so dass ein Lösen des Schutztopfs 7 auch bei beengten Verhältnissen möglich ist.

Um ein leichteres Entfernen des Schutztopfs 7 von dem Befestigungselement 6 zu ermöglichen, sind Rückstellelemente in Form von Gummipuffern 31 am Befestigungselement 6 vorgesehen. Im montierten Zustand stützt sich der Schutztopf 7 gegen die Gummipuffer 31 ab, die dann elastisch vorgespannt bleiben. Sobald die Rastelemente 24 in ihre Freigabeposition überführt werden, drücken die Gummipuffer 31 den Schutztopf 7 geringfügig axial vom Befestigungselement 6 weg, so dass die Rastelemente 24 nicht wieder hinter die Rastfläche 27 greifen können, sondern der Rastabschnitt 26 außen an der Stellfläche 28 an dem Rastvorsprung 25 in Anlage kommen. Ein nochmaliges unbeabsichtigtes Verrasten wird somit verhindert.

### Bezugszeichenliste

- 1: Gehäuse
- 2: Wellenzapfen
- 3: Gelenkwelle
- 4: Verschluss
- 5: Gelenkwellenschutz
- 6: Befestigungselement
- 7: Schutztopf
- 8: Verriegelungseinrichtung
- 9: erste Fügestelle
- 10: zweite Fügestelle
- 11: erstes Schalenelement
- 12: zweites Schalenelement
- 13: Längskante
- 14: Längskante
- 15: Haken
- 16: Haken
- 17: Verbindungskanal
- 18: Verbindungsstift
- 19: Öse
- 20: Kette
- 21: Sicherungsöse
- 22: Sicherungsöse
- 23: Stützkragen
- 24: Rastelement
- 25: Rastvorsprung
- 26: Rastabschnitt
- 27: Rastfläche
- 28: Stellfläche
- 29: Ausbuchtung
- 30: Kragen
- 31: Gummipuffer
- 32: Vorderkante

- L: Längsachse

## Patentansprüche

1. Schutzvorrichtung für eine Gelenkwelle (3), wobei die Schutzvorrichtung Folgendes aufweist:
ein Befestigungselement (6), das derart ausgebildet ist, dass es um einen aus einem Gehäuse (1) ragenden Wellenzapfen (2) positionierbar und am Gehäuse (1) befestigbar ist,
einen rohrförmigen Schutztopf (7), der sich entlang einer Längsachse (L) erstreckt und der derart ausgebildet ist, dass er um eine mit dem Wellenzapfen (2) verbundene Gelenkwelle (3) positionierbar ist, und
zumindest eine Verriegelungseinrichtung (24, 25) zum Befestigen des Schutztopfes (7) an dem Befestigungselement (6),
**dadurch gekennzeichnet,**
**dass** der Schutztopf (7) zumindest eine sich in Längsrichtung (L) erstreckende Fügestelle (9, 10) aufweist, an welcher der Schutztopf (7) geteilt ist und geöffnet werden kann,
**dass** zumindest eine der Fügestellen (9, 10) einen Verschlussmechanismus (15, 16, 18) aufweist, mit dem der Schutztopf (7) zum Verschließen verbindbar ist,
**dass** der Verschlussmechanismus Formschlusselemente (15, 16), insbesondere Ösen und/oder Haken, jeweils an zu verbindenden Längskanten (13, 14) der jeweiligen Fügestelle (9, 10) aufweist, die ineinander greifend ausgebildet sind, und
**dass** die Formschlusselemente (15, 16) im verbundenen Zustand des Schutztopfes (7) zueinander fluchten und einen Verbindungskanal (17) bilden, wobei ein Verbindungsstift (18) durch den Verbindungskanal (17) hindurchgeführt ist.

2. Schutzvorrichtung nach Anspruch 1,
**dadurch gekennzeichnet,**
**dass** der Schutztopf (7) zumindest zwei sich in Längsrichtung (L) erstreckende Fügestellen (9, 10) aufweist, die den Schutztopf (7) in mindestens zwei Schalenelemente (11, 12) teilen.

3. Schutzvorrichtung nach Anspruch 2,
**dadurch gekennzeichnet,**
**dass** zumindest eine der Fügestellen (9, 10) ein Scharnier umfasst, über das die mindestens zwei Schalenelemente (11, 12) zueinander bewegbar sind.

4. Schutzvorrichtung nach einem der vorangehenden Ansprüche,
**dadurch gekennzeichnet,**
**dass** der Verbindungsstift (18) einen gegenüber dem Verbindungskanal (17) erweiterten Kopfabschnitt (19) aufweist.

5. Schutzvorrichtung nach Anspruch 4,
**dadurch gekennzeichnet,**
**dass** der erweiterte Kopfabschnitt als Öse (19) gestaltet ist.

6. Schutzvorrichtung nach einem der vorangehenden Ansprüche,
**dadurch gekennzeichnet,**
**dass** die Schutzvorrichtung ein Sicherungselement (20) aufweist, durch welches das Befestigungselement (6), den Schutztopf (7) und den Verbindungsstift (18) in einem voneinander gelösten Zustand untrennbar verbunden sind.

7. Schutzvorrichtung nach einem der vorangehenden Ansprüche,
**dadurch gekennzeichnet,**
**dass** das Befestigungselement (6) im montierten Zustand des Schutztopfes (7) den Verbindungskanal (17) in axialer Richtung derart überdeckt, dass der Verbindungsstift (18) gegen Entfernen aus dem Verbindungskanal (17) in Richtung zum Befestigungselement (6) gesichert ist.

8. Schutzanordnung, die Folgendes aufweist:
eine Gelenkwelle (3) mit einem die Gelenkwelle (3) umgebenden Gelenkwellenschutz (5), die derart gestaltet ist, dass sie antriebsmäßig mit einem aus einem Gehäuse ragenden Wellenzapfen (2) verbindbar ist, und
eine Schutzvorrichtung nach einem der vorangehenden Ansprüche, wobei das Befestigungselement (6) um den Wellenzapfen (2) positionierbar und am Gehäuse (1) befestigbar ist und wobei der Schutztopf (7) der Schutzvorrichtung sowohl die Gelenkwelle (3) als auch den Gelenkwellenschutz (5) teilweise umgibt.

## Claims

1. A protective device for a universal shaft (3) comprising:
an attachment element (6) formed so as to be positioned around a shaft journal (2) projecting from a housing (1) and to be attached to said housing (1),
a tubular protective guard (7) extending along a longitudinal axis (L) and configured to be positioned around a universal shaft (3) connected to the shaft journal (2), and
at least one latching device (24, 25) for attaching the tubular protective guard (7) to the attachment element (6),
**characterised in,**
**that** the tubular protective guard (7) has at least one joining location (9, 10) extending in longitudinal direction separating the tubular protective guard (7) for opening the protective guard (7), and
**that** at least one of the joining locations (9, 10) has a closure mechanism (15, 16, 18) to which the tubular protective guard (7) can be connected for closure, in that the closure mechanism has form-fit elements (15, 16), in particular eyelets and/or hooks, at longitudinal edges (13, 14) of the respective joining point (9, 10), which are respectively to be connected and which are designed to engage one into the other, and
the form-fit elements (15, 16) are aligned to each other in the closed condition of the tubular protective guard (7) and form a connection channel (17), wherein a connection pin (18) is accommodated within the connection channel (17).

2. Protective device according to claim 1,
**characterised in,**
**that** the tubular protective guard (7) has at least two joining locations (9, 10) extending in longitudinal direction separating the tubular protective guard (7) in at leat two shell elements (11, 12).

3. Protective device according to claim 2,
**characterised in,**
**that** at least one of the joining locations (9, 10) comprises a hinge via which the at least two shell elements (11, 12) can be moved relative to one another.

4. Protective device according to one of the preceeding claims,
**characterised in**,
the connection pin (18) has a head portion (19) increased relative to the connection channel (17).

5. Protective device according to claim 4,
**characterised in,**
**that** the increased head portion (19) is formed as an eyelet.

6. Protective device according to one of the preceeding claims,
**characterised in,**
**that** the protective device has a securing element (20) inseparably connecting the attachment element (6), the tubular protective guard (7) and the connection pin (18) when detached from each other.

7. Protective device according to one of the preceeding claims,
**characterised in,**
**that** the attachment element (6) overlaps in a mounted condition of the tubular protective guard (7) the connection channel (17) in axial direction such, that the connection pin (18) is secured against removal from the connection channel (17) in direction towards the attachment element (6).

8. Protective arrangement comprising:
a universal shaft (3) with a universal shaft protection (5) surrounding the universal shaft (3) and being design such, that the universal shaft (3) is drivingly connectable to a shaft journal (2) projecting from a housing, and
a protective device according to any one of the preceding claims, wherein the attachment element (6) is positionable around the shaft journal (2) and attachable to the housing (1) and wherein the tubular protective guard (7) of the protective device surrounds partially the universal shaft (3) as well as the universal shaft protection (5).

## Revendications

1. Dispositif de protection pour un arbre d'entraînement (3), dans lequel le dispositif de protection présente ce qui suit :
un élément de fixation (6) qui est ainsi conçu qu'il peut être positionné autour d'un bout d'arbre (2) faisant saillie d'un logement (1) et être fixé sur le logement (1),
un contenant de protection (7) tubulaire qui s'étend le long d'un axe longitudinal (L) et est ainsi conçu qu'il peut être positionné autour d'un arbre d'entraînement (3) relié au bout d'arbre (2), et
au moins un dispositif de verrouillage (24, 25) pour fixer le contenant de protection (7) sur l'élément de fixation (6),
**caractérisé en ce que**
le contenant de protection (7) présente au moins un point de jonction (9, 10) s'étendant dans le sens longitudinal (L), sur lequel le contenant de protection (7) est divisé et peut être ouvert,
qu'au moins un des points de jonction (9, 10) présente un mécanisme de fermeture (15, 16, 18) avec lequel le contenant de protection (7) peut être relié pour la fermeture,
que le mécanisme de fermeture présente des éléments à complémentarité de forme (15, 16), en particulier des oeillets et/ou des crochets, respectivement sur des bords longitudinaux (13, 14) à relier des points de jonction (9, 10) respectifs, qui sont conçus s'engageant l'un dans l'autre, et
que les éléments à complémentarité de forme (15, 16) sont adjacents l'un à l'autre lorsque le contenant de protection (7) est relié et forment un canal de liaison (17), dans lequel une tige de liaison (18) est passée au travers du canal de liaison (17).

2. Dispositif de protection selon la revendication 1, **caractérisé en ce que** le contenant de protection (7) présente au moins deux points de jonction (9, 10) s'étendant dans le sens longitudinal (L) qui divisent le contenant de protection (7) en au moins deux éléments de coque (11, 12).

3. Dispositif de protection selon la revendication 2, **caractérisé en ce qu'**au moins un des points de jonction (9, 10) présente une charnière par le biais de laquelle les aux moins deux éléments de coque (11, 12) sont mobiles entre eux.

4. Dispositif de protection selon au moins l'une des revendications précédentes,
**caractérisé en ce que** la tige de liaison (18) présente un tronçon de tête (19) élargi par rapport au canal de liaison (17).

5. Dispositif de protection selon la revendication 4, **caractérisé en ce que** le tronçon de tête élargi est conçu en tant qu'oeillet (19).

6. Dispositif de protection selon au moins l'une des revendications précédentes,
**caractérisé en ce que** le dispositif de protection présente un élément de sûreté (20) par lequel l'élément de fixation (6), le contenant de protection (7) et la tige de liaison (18) sont reliés de manière inséparable dans un état séparé l'un de l'autre.

7. Dispositif de protection selon au moins l'une des revendications précédentes,
**caractérisé en ce que** l'élément de fixation (6), lorsque le contenant de protection (7) est monté, couvre le canal de liaison (17) dans le sens axial de telle sorte que la tige de liaison (18) est assurée contre un retrait hors du canal de liaison (17) en direction de l'élément de fixation (6).

8. Ensemble de protection, présentant ce qui suit :
un arbre d'entraînement (3) avec une protection d'arbre d'entraînement (5) entourant l'arbre d'entraînement (3) qui est ainsi conçue qu'elle peut être reliée en entraînement avec un bout d'arbre (2) faisant saillie d'un logement, et
un dispositif de protection selon l'une quelconque des revendications précédentes, dans lequel l'élément de fixation (6) peut être positionné autour du bout d'arbre (2) et être fixé sur le logement (1), et dans lequel le contenant de protection (7) du dispositif de protection entoure partiellement tant l'arbre d'entraînement (3) que la protection d'arbre d'entraînement (5).
